# EUROPEAN PATENT SPECIFICATION

(11) **EP 2 719 024 B1**
(45) Date of publication and mention of the grant of the patent: **02.05.2018**
(21) Application number: 12726899.3
(22) Date of filing: 29.05.2012
(51) Int. Cl.: H01R 13/436, H01R 13/516, B60L 11/18

(54) **CONNECTOR**
STECKVERBINDER
CONNECTEUR

(30) Priority: 07.06.2011 JP 2011126966
(43) Date of publication of application: 16.04.2014
(73) Proprietor: Yazaki Corporation, Minato-ku Tokyo 108-8333 (JP)
(72) Inventor: KOJIMA, Hiroshi, Makinohara-shi Shizuoka 421-0407 (JP); SAWADA, Tsutomu, Makinohara-shi Shizuoka 421-0407 (JP)
(74) Representative: Grünecker Patent- und Rechtsanwälte PartG mbB
(86) International application number: PCT/JP2012/003483
(87) International publication number: WO 2012/169144

(56) References cited:
- WO-A1-2010/024362
- DE-A1- 4 343 209
- DE-A1- 4 343 210
- FR-A1- 2 754 943
- US-A- 5 906 500

## Description

### Technical Field

The present invention relates to a connector which can reduce the number of parts, simplify a configuration thereof, and perform assembly and disassembly at short times.

### Background Art

A power supply device as a drive source of an electric motor is mounted on an electric vehicle driving with an electric motor and a hybrid vehicle driving with a combination of an engine and an electric motor and so on.

The power supply device has a battery assembly which includes a plurality of batteries. A positive electrode is arranged at one end of the battery, and a negative electrode is arranged at the other end thereof. The batteries are connected in series so as to obtain a desired voltage. Furthermore, the batteries are disposed along one direction so that the positive electrode and the negative electrode are positioned next to each other.

In the above electric vehicle and the hybrid vehicle, a receiving connector is arranged. The receiving connector is fitted to a feeder connector (for example, see the Patent Document 1 defining a connector according to the preamble of claim 1) which is connected to a battery charger or a household electric source, and the battery assembly is charged.

As shown in FIG. 8, the feeder connector disclosed in the Patent Document 1 has a connector housing 103 received in a case not shown in drawings, a terminal 124 received in the connector housing 103, a sleeve member 192 as a fixed member, a rear packing 133 as a fixed member, and a rear holder 105. The sleeve member 192 and the rear packing 133 fix the terminal 124 in the connector housing 103, and are received in the connector housing 103. An opening of a rear end 103a of the connector housing 103 is closed by fitting the rear holder 105 to the rear end 103a. Furthermore, the rear holder 105 prevents the sleeve member 192 and the rear packing 133 from moving in a longitudinal direction of the terminal 124.

### Citation List

### Patent Literature

PTL 1: JP 2010 055 809 A

### Summary of Invention

### Technical Problem

In the connector housing 103 of the feeder connector disclosed in the Patent Document 1, the terminal 124, the sleeve member 192 and the rear packing 133 are held in the connector housing 103 by the rear holder 105. For this reason, it is required to arrange the rear holder 105 in the connector housing 103. As a result, there is a problem such that the number of parts of the feeder connector is increased.

Furthermore, the rear holder 105 is fitted to the rear end 103a of the connector housing 103 after a plurality of electric wires which are respectively connected to the terminals 124 are inserted into a prescribed position of the rear holder 105. Therefore, construction thereof becomes complex. So it takes a lot of trouble in assembling of the connector.

Furthermore, since the rear holder 105 is fitted to the rear end 103a of the connector housing 103, the rear holder 105 is not removed easily from the connector housing 103 when disassembling of the connector housing 103 is required with maintenance or repair. Thus, time required for disassembling of the connector housing 103 and hard work are increased.

Furthermore, the connector housing 103 is assembled with great caution so as to not be assembled in a case of the feeder connector in a wrong direction. For this reason, time required for assembling the feeder connector is longer.

Accordingly, an object of the present invention is to solve the above problems. More specifically, an object of the present invention is to provide a connector which can reduce the number of parts, simplify a configuration thereof, and perform assembly and disassembly at short times.

### Solution to Problem

In order to attain the above object, the present invention provides a connector as defined in independent claim 1.

The connector further includes an insertion slit in which an electric wire connected to the terminal is inserted. The insertion slit is arranged in the abutment member.

### Advantageous Effects of Invention

According to the connector of the present invention, the abutment member which abuts on the fixing member received in the connector housing is vertically arranged in the case. Therefore, parts such as a rear holder can be reduced, and the number of parts can be reduced.

Furthermore, since the abutment member which abuts on the fixing member received in the connector housing is arranged in the case, construction of the connector can be simplified. Moreover, time required for assembling the connector can be reduced.

In addition, an end portion of the connector housing is not closed with a rear holder and so on, namely, is opened. For this reason, a fixing member and a terminal which are received in the connector can be removed and disassembled by only dismounting the connector housing from the case of the feeder connector. Therefore, maintenance, repair and the like can be easily performed, and time spent on the disassembly of the connector can be decreased.

Furthermore, according to the connector of the present invention, the insertion slit is arranged in the abutment member which abuts on the fixing member received in the connector housing. As a result, an assembly direction of the connector housing can be positioned by only inserting an electric wire guided from the end portion of the connector housing into the insertion slit. Therefore, assembling work of the connector can be easily performed, and time required for assembling the connector can be reduced.

Thus, the connector of the present invention can reduce the number of parts, and simplify a configuration thereof. Furthermore, assembly and disassembly of the connector can be performed at short time.

### Brief Description of Drawings

[fig.1]FIG. 1 is a perspective view of a connector according to an embodiment of the present invention.
[fig.2]FIG. 2 is a cross-sectional view taken along the line II-II of the connector shown in FIG. 1.
[fig.3]FIG. 3 is a perspective view showing a main portion of an internal constitution of s case shown in FIG. 1
[fig.4]FIG. 4 is a perspective view of one case of the connector shown in FIG. 1.
[fig.5]FIG. 5 is a perspective view of an abutment member of the one case shown in FIG. 4.
[fig.6]FIG. 6 is an exploded perspective view of a connector housing of the connector shown in FIG. 3.
[fig.7]FIG. 7 is a cross-sectional view of another connector example according to the present invention.

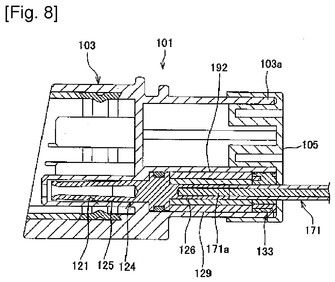

[fig.8]FIG. 8 is a cross-sectional view of a connector housing of a conventional connector.

### Description of Embodiments

### Example 1

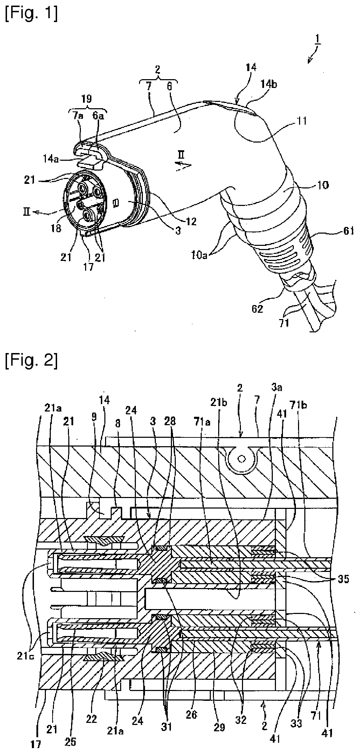

A connector according to an embodiment of the present invention will be explained with reference to FIGs. 1 to 6.

As shown in FIG. 1, the connector 1 of the present invention has a connector housing 3 to be mated with a mating connector, a case 2 receiving the connector housing 3, and an electric wire 71 connected to a terminal 24 which is shown in FIG. 2 and described below of the connector housing 3 and arranged in the case 2.

As shown in FIGs. 1 and 2, the connector housing 3 is made of insulating synthetic resin such as polybutylene terephthalate resin, and formed in a cylindrical shape. The connector housing 3 has a plurality of the terminals 24 (In the embodiment shown in drawings, five terminals 24), and a plurality of terminal receiving portions 21, an opening 18, a projection portion 17, a circular projection 8, and a packing member 22. Each one of the terminals 24 is received in each terminal receiving portion 21 respectively. The terminal receiving portions 21 are vertically arranged in the opening 18. The positioning of the mating connector is defined by the projection portion 17. The circular projection 8 is engaged with the case 2. The packing member 22 is extended in a circumferential direction of an inner periphery of the opening 18, and blocks a space between the mating connector and the connector housing 3 when being mated to the mating connector.

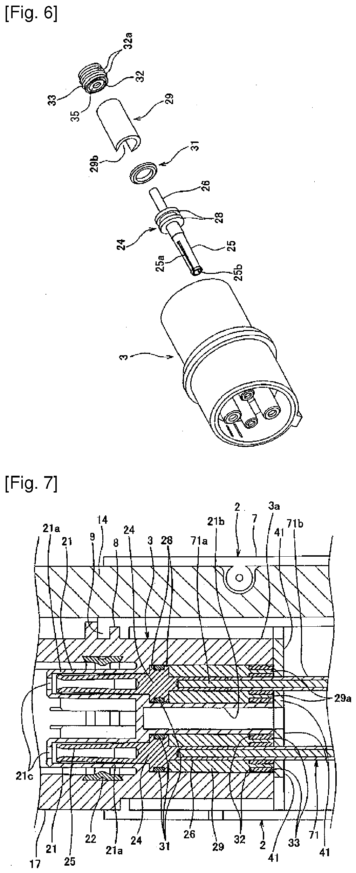

As shown in FIGs. 2 and 6, the terminal 24 consists of conductive metal such as copper, copper alloy, aluminum, aluminum alloy and the like, and is formed in a cylindrical shape. The terminal 24 has an electric contact portion 25 electrically coming into contact with the terminal of the mating connector, an electric wire connecting portion 26 connecting to the electric wire 71, and a center packing 31 for preventing ingress of water.

The electric contact portion 25 has a plurality of slits 25a (In illustration example, four slits are provided) and a rib 25b, and is formed in a taper shape. The slit 25a extends from one end of the opening 18 side to a central portion along a longitudinal direction of the terminal 24. The rib 25b is arranged in the one end of the opening 18 side. Thereby, when a male-type terminal of the mating connector is inserted into the electric contact portion 25, a tip of the male-type terminal abuts on a tip portion of the electric contact portion 25, and expands the electric contact portion 25. As a result, a pressing force of the electric contact portion 25 so as to press the surface of the male-type terminal is increased, and electric contact is steadily performed. Furthermore, when the male-type terminal is removed from the electric contact portion 25, the electric contact portion 25 is returned to a shape before deforming by elastic restoring force. Thus, performance of electric contact can be maintained even if the insertion and removing thereof are repeated.

The electric wire connecting portion 26 is formed in a cylindrical shape. When a core wire 71a of the electric wire 71 is inserted into the electric wire connecting portion 26, the electric wire connecting portion 26 is crimped, and the core wire 71a is connected to the electric wire connecting portion 26. The electric wire connecting portion 26 is crimped by common tools such as a crimp tool. A sleeve member 29 and a rear packing 33 are arranged in the electric wire connecting portion 26, and are fixing members. The electric wire connecting portion 26 is inserted into the sleeve member 29 and the rear packing 33. Further, the sleeve member 29 and the rear packing 33 are slidingly contacted in an inner wall of a second receiving portion 21b.

The sleeve member 29 as the fixing member is formed in a tube shape of a cross sectional C-shape. The sleeve member 29 has an inner periphery formed along an external form of the electric wire connecting portion 26 and an external form of the electric wire 71, an outer periphery formed along an inner periphery of the second receiving portion 21b, and a slit 29b parallel to a longitudinal direction of the sleeve member 29 from one end of the sleeve member 29 to the other end thereof. The slit 29b is formed with the same width as the diameter of the electric wire connecting portion 26 and the wire diameter of the electric wire 71. Therefore, the sleeve member 29 can easily be fixed to the electric wire connecting portion 26 connected to the core wire 71a of the electric wire 71 by crimping.

The rear packing 33 as the fixing member is formed in a cylindrical shape. The inner periphery of the rear packing 33 is formed along the external form of the electric wire 71, and the outer periphery thereof is formed along the inner periphery of the second receiving portion 21b. The rear packing 33, as an example, consists of synthetic rubber having excellent electric property such as silicone rubber or ethylene-propylene rubber. The rear packing 33 has a packing main body 32, a plurality of circular projection portions 32a, and a core member 35. The circular projection portions 32a are arranged in the outer periphery of the packing main body 32, and extend in a periphery direction. The core member 35 is arranged in a concentric pattern between the inner periphery of the packing main body 32 and the outer periphery thereof, and integrally formed with the packing main body 32. The circular projection potions 32a are located with spaces in a longitudinal direction of the terminal 24 each other. The core member 35, as one example, is made of hard resin such as polybutylene terephthalate resin.

The center packing 31 is formed in a circular shape, and consists of synthetic rubber having excellent electric property such as silicone rubber or ethylene-propylene rubber. Furthermore, the center packing 31 is fitted between a pair of the ribs 28 which arranged in the middle area of the terminal 24.

The terminal receiving portion 21 has the first receiving portion 21a which receives the electric contact portion 25, and the second receiving portion 21b which receives the electric wire connecting portion 26. The terminal receiving portion 21 is formed in communication with the end portion 3a side away from the mating connector and the opening 18. Furthermore, the terminal receiving portion 21 is formed along the external form of the terminal 24.

The first receiving portion 21a is formed in a cylindrical shape along the external form of the electric contact portion 25 of the terminal 24. A insertion hole 21c in which the male-type terminal of the mating connector is inserted is arranged in the tip portion of the first receiving portion 21a. Thereby, the electric contact portion 25 of the terminal 24 is protected from deformation and dirt by casually contacting.

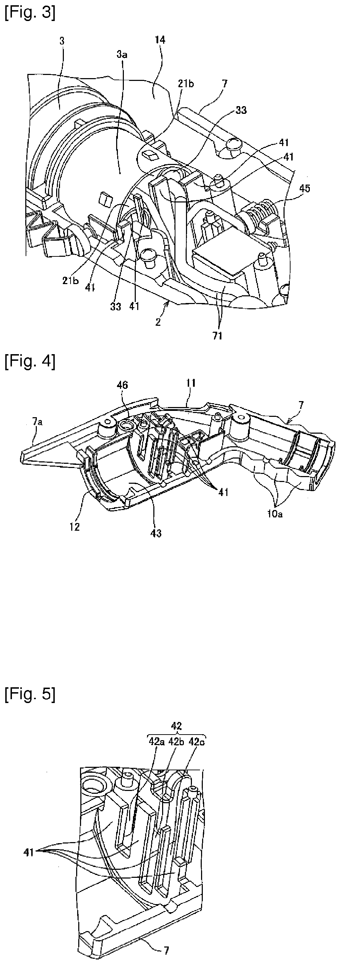

As shown in FIGS. 2 and 3, the second receiving portion 21b is formed in a cylindrical shape. The center packing 31 arranged in the electric wire connecting portion 26 of the terminal 24 slidingly comes in contact with the second receiving portion 21b. The second receiving portion 21b is communicated with the end portion 3 a of the connector housing 3. One end portion of the second receiving portion 21b and one end portion of the end portion 3a are arranged in the same plane.

As shown in FIGs. 1 and 6, the opening 18 is inclined against the longitudinal direction of the connector housing 3.

The terminal receiving portions 21 are arranged opposed each other in the opening 18 based on the arrangement of the male-type terminal so that the male-type terminal of the mating connector is electrically connected. Furthermore, the opening 18 is projected slightly longer than a tip of the terminal receiving portion 21.

The projection portion 17 is arranged in the outer periphery of the opening 18 of the connector housing 3, and extends to the circular projection 8. Furthermore, the projection portion 17 is slidably formed so that a gap of the mating connector is fitted to the projection portion 17.

As shown in FIG. 2, the circular projection 8 is formed with the length of a circular groove 9 arranged in one end of the case 7 or 2 and the width thereof. As a result, when the circular projection 8 is engaged to the circular groove 9, the connector housing 3 is fixed to the case 7.

The packing member 22, as one example, is made of synthetic rubber such as polyurethane rubber having excellent mechanical strength and good abrasion resistance. As shown in FIG. 2, the packing member 22 is arranged in a mounting gap which is arranged in the inner periphery of the opening 18. The packing member 22 is formed so that the center portion of the packing member 22 slightly projects and is slidably contacted to the outer periphery of the mating connector.

As shown in FIG. 2, the case 2 has a pair of case members 6 and 7. One case member 6 and the other case member 7 are fixed by fixing means such as a screw member not shown. The case 2, as one example, is made of synthetic resin such as polybutylene terephthalate resin having excellent electric characteristics and good flame resistance. Furthermore, as shown in FIGs. 1, 3 and 4, the case 2 has a lock lever 14, a bearing portion 46 supporting the lock lever 14, a window portion 11 operating the lock lever 14, a receiving chamber 43 receiving the connector housing 3, a connector opening 12 from which the connector housing 3 received in the receiving chamber 43 is projected, an abutment member 41 abutting on the end portion 3a of the connector housing 3 received in the receiving chamber 43, a grip portion 10 gripped by a worker, an electric wire guiding portion 61 in which the electric wire 71 is guided from the case 2, and an electric wire protection 62 for preventing the electric wire 71 guided from the electric wire guiding portion 61 from bending. The lock lever 14 is formed so that engagement of connector 1 and the mating connector is unlocked.

As shown in FIGs. 1 and 3, the lock lever 14 has a lock portion 14a projecting from the connector opening 12 of the case 2, a button portion 14b slightly projecting from the window portion 11, a shaft portion supported by the bearing portion 46, and a spring member 45 arranged between the shaft portion and the button portion 14b and biasing the button portion 14b toward the window portion 11 side. Furthermore, the lock lever 14 is formed so that the lock portion 14a and the button portion 14b are moved up and down each other when a worker pushes the button portion 14b or pushes back.

The lock portion 14a extends close to one end of the opening 18 of the connector housing 3. Furthermore, as shown in FIGs. 1 and 4, the lock portion 14a is protected from outside by extension portions 6a and 7a extending from the connector opening 12 of the case 2. The tip portion of the locking portion 14a is formed in an arrow shape in which the width is gradually increased toward the button portion 14b. The button portion 14b is formed in a box shape along an outer edge of the window portion 11.

As shown in FIG. 4, in one side of the receiving chamber 43 in the longitudinal direction of the connector housing 3 received in the receiving chamber 43, the connector opening 12 is located. Furthermore, in the other side thereof, the abutment member 41 is located. The receiving chamber 43 is formed in a cylindrical shape along the outline of the connector housing 3.

As shown in FIG. 5, a plurality of the abutment members 41 (In illustration example, four abutment members) is vertically arranged from the case member 7. As shown in FIGs. 3 and 5, the abutment members 41 are arranged with a space in a direction perpendicular to the longitudinal direction of the connector housing 3 each other. A plurality of insertion slits 42 are arranged between the abutment members 41. In the insertion slits 42, the electric wires 71 guided from the end portion 3a of the connector housing 3 are inserted. In the embodiment shown in drawings, three electric wires 7 are inserted into the insertion slits 42. As shown in FIG. 3, the abutment members 41 is vertically arranged in a position abutting on the rear packing 33, which is located in the end portion 3a of the connector housing 3, as the fixing member when the connector housing 3 is received in the receiving chamber 43. Also, the abutment member 41 may vertically be arranged from the case member 6.

As shown in FIGs. 3 and 5, a plurality of insertion slits 42 is positioned at a prescribed position with a predefined width based on the wire diameter of the electric wire 71 guided from the end portion 3a of the connector housing 3 and a guided position when the connector housing 3 is received in the receiving chamber 43.

More specifically, when the connector housing 3 in which the plurality of terminals 24 and the plurality of electric wires 71 connected to the terminals 24 are assembled is received in the receiving chamber 43 in a suitable assembly direction, each relative location of the plurality of insertion slits 42 corresponding to the plurality of the electric wires 71 guided from the end portion 3a of the connector housing 3 is a design position. Therefore, the connecter housing 3 can be received in the receiving chamber 43 in a suitable assembly direction by matching the connector housing 3 to a position in which the electric wires 71 are inserted in the insertion slits 42.

As shown in FIG. 1, the grip portion 10 has a plurality of step portions 10a. In the embodiment shown in FIG. 1, three step portions 10 are provided, and are formed by expanding the outer periphery of the case 2. As shown in FIG. 4, the step portion 10a is formed with thick structure.

The electric wire guiding portion 61, as shown in FIG. 1, is sandwiched between the pair of the case members 6 and 7, and fixed to the case 2. As one example, the electric wire guiding portion 61 is made of synthetic resin such as polyvinyl chloride resin having excellent insulation properties and flame retardant properties.

The electric wire protection 62 is made of synthetic resin such as polyvinyl chloride resin having excellent insulation properties and flame retardant properties, and integrally formed with the electric wire guiding portion 61 and the electric wire 71. Furthermore, the electric wire protection 62 includes flexible characteristics. For this reason, when the electric wire 71 is bent close to the electric wire protection 62, the electric wire protection 62 prevents the electric wire 7 from local bending because the electric wire protection 62 is elastically deformed.

The electric wire 71, as shown in FIG. 2, has a conductive core wire 71a and a coated portion 71b. The core wire 71a is formed by twisting a plurality of conductive wires. The conductive wire is made of conductive metal such as copper, copper alloy and the like. The coated portion 71b covers the core wire 71a, and is made of synthetic resin such as polyvinyl chloride resin. Therefore, the outer surface of the electric wire 71 is the outer surface of the coved portion 71b. Also, the core wire 71a may be constructed of one conductive wire. The electric wire 71 includes an electric wire for electric power supply and a signal electric wire. Furthermore, the electric wire 71 may be a cabtyre cable covering the electric wire for electric power supply and the signal electric wire with an insulator and protecting the insulator with a sheath.

The signal electric wire, for example, is used for signal communications of connecting condition between the electric vehicle or hybrid vehicle and a plug-in station, charging status and so on.

Next, assembly work of the connector 1 constructed as described above will be explained.

First, as shown in FIG. 6, the core wire 71a of the electric wire 71 is crimped and connected to the electric wire connecting portion 26 of the terminal 24, and the center packing 31 is fitted between the pair of the ribs 28 which is arranged in the center portion of the electric wire connecting portion 26. Thereafter, the sleeve member 29 is attached to the terminal 24 in the rib 28 side of the electric wire connecting portion 26, and the rear packing 33 is pushed into the free end of the electric wire connecting portion 26. Next, the terminal 24 having the electric wire 71, the center packing 31, the sleeve member 29 and the rear packing 33 is inserted and pushed in the second receiving portion 21b of the terminal receiving portion 21 of the connector housing 3 until the electric contact portion 25 of the terminal 24 is positioned in the first receiving portion 21a communicated with the second receiving portion 21b. Likewise, the terminal 24 is assembled in the other terminal receiving portion 21, and the packing member 22 is fitted in the opening 18 side.

Next, as shown in FIG. 3, the connector housing 3 in which the terminal 24 is assembled is received in the receiving chamber 43 of the case member 7. At this time, the electric wires 71 which are guided from the end portion 3a of the connector housing 3 are respectively inserted into the insertion slits 42a, 42b, 42c which is formed with the width based on the electric wire for electric power supply having a large diameter and the signal electric wire having a small diameter and is located in a position based on the wiring position of the electric wire 71. Thereby, the connector housing inserting each electric wire 71 in each insertion slit 42a, 42b, 42c is assembled in the case member 7 in a suitable assembly direction. Furthermore, at this time, as shown in FIG. 2, a plurality of the abutment members 41 abuts on each rear packing 33 as the fixing member for fixing the terminals 24, and the terminals 24 are prevented from moving to the end portion 3a of the connector housing 3.

Next, the lock lever 14, the spring member 45 biasing the lock lever 14, the electric wire guiding portion 61 and parts not shown are assembled in the case member 7 at a prescribed position respectively, and the case member 7 is closed and locked by the case member 6. Then, the pair of the case members 6 and 7 are fixed by the fixing means such as the screw member not shown, and finally the connector 1 is assembled.

The connector assembled in the above manner is used as a charging connector of the electric vehicle or hybrid vehicle. The vehicle and the connector 1 are communicated each other, and current is applied after a signal of a charging start is transmitted from the vehicle. Also, the connector 1 is not limited to the charging connector described above. For example, the connector of the present invention can be used for a number of things as a connector connected to the mating connector.

Next, disassembly work of the connector 1 will be explained.

First, the fixing means such as the screw member of the connector 1 is removed, and the case members 6 and 7 are separated. Subsequently, the lock lever 14, the spring member 45, the electric wire guiding portion 61 and the other parts are removed.

Second, the connector housing 3 is removed from the receiving chamber 43 of the case member 7. At this time, since each insertion slit 42a, 42b, 42c of the abutment member 41 is formed parallel to the assembly direction of the connector housing 3, the electric wires 71 are pulled out from each the slit 42a, 42b, 42c at the same time as the removal of the connector housing 3.

Thereafter, the rear packing 33, which is inserted in the second receiving portion 21b of the connector housing 3 removed from the receiving chamber 43, as the fixing member is pulled out. Then, the electric wire 71 is pulled in a direction away from the end portion 3a of the connector housing 3 and parallel to the longitudinal direction of the terminal 24, and the terminal 24 is removed from the connector housing 3.

In the above manner, the rear packing 33, the terminal 24 and so on in the connector 1 can be easily removed and disassembled from the connector housing 3 without removing a member such as a rear holder.

According to the embodiment of the present invention, the connector 1 to be mated with the mating connector has the connector housing 3 receiving the terminal 24 and the fixing member 33 fixing the terminal 24; the case 2 receiving the connector housing 3; and the abutment member 41 vertically arranged in the case 2 so that the abutment member 41 is positioned at the end portion 3a of the connector housing 3 away from the mating connector, and abutting on the fixing member 33 received in the end portion 3a of the connector housing 3 so as to prevent the terminal 24 from moving in a longitudinal direction of the terminal 24.

Thus, the connector 1 of the present invention can reduce parts such as a rear holder and a number of parts because the abutment member 41 abutting on the fixing member 33 received in the connector housing 3 is vertically arranged in the case 2.

Furthermore, construction of the connector 1 can be simplified, and time required for assembling the connector 1 can be reduced.

Furthermore, in the connector 1, the end portion 3a of the connector housing 3 is opened without being closed by the rear holder. Therefore, the fixing member 33 received in the connector housing 3, the terminal 24 received in the connector housing 3 and so on can be removed and disassembled by only removing the connector housing from the case 2. Thus, maintenance and repair can be easily performed, and time spent on the disassembly of the connector 1 can be reduced.

In addition, according to the embodiment of the present invention, the insertion slit 42 is arranged in the abutment member 41 of the connector 1 so as to insert the electric wire 71 connected to the terminal 24 into the insertion slit 42. Therefore, it is possible to position an assembly direction of the connector housing 3. Thus, assembling work of the connector 1 can be easily performed, and time required for assembling the connector can be reduced.

In this manner, the connector of the present invention 1 can reduce the number of parts and be simple in structure. Additionally, time required for assembling and disassembling can be reduced.

### Example 2

Next, another example according to the embodiment of the connector 1 of the present invention 1 will be explained with reference to FIG. 7. In FIG. 7, the same reference numeral designates the same or corresponding portion of the connector 1.

The connector 1 according to the other embodiment, as shown in FIG. 7, has an extended portion 29a in the sleeve member 29 arranged in the electric wire connecting portion 26 of the terminal 24. The extended portion 29a is extended from one end of the sleeve member 29 in the longitudinal direction. The rear packing 33 is integrally arranged in the extended portion 29a. The extended portion 29a is formed with the same length as the rear packing 33 in the longitudinal direction of the terminal 24, and the rear packing 33 and the extended portion 29a abut on the abutment member 41. Therefore, various members such as the terminal 24 received in the connector housing 24 can be steadily maintained in the connector housing 3 by the abutment member 41.

### Reference Signs List

1 connector
2 case
3 connector housing
3a end portion
6, 7 a pair of case members
21 terminal receiving portion
21a first receiving portion
21b second receiving portion
24 terminal
25 electric contact portion
26 electric wire connecting portion
32 packing main body
33 rear packing (fixing member)
41 abutment member
42, 42a, 42b, 42c insertion slit
43 receiving chamber
71 electric wire

## Claims

1. A connector (1) to be mated with a mating connector comprising:
a connector housing (3) receiving a terminal (24) and a fixing member (33), the fixing member (33) being received in the end portion (3a) of the connector housing (3) away from the mating connector for fixing the terminal (24) along the longitudinal direction of the terminal;
a case (2) receiving the connector housing (3); **characterised in that** it further comprise an abutment member (41) protruding inwardly from the case (2) in a direction perpendicular to the longitudinal direction so that the abutment member (41) is positioned at the end portion (3a) of the connector housing (3) away from the mating connector, and abutting on the fixing member (33) so as to prevent the terminal (24) from moving in a longitudinal direction of the terminal (24) away from the mating direction of the connector.

2. The connector (1) as claimed in claim 1, wherein an insertion slit (42) in which an electric wire (71) connected to the terminal (24) is inserted is arranged in the abutment member (41).

## Patentansprüche

1. Steckverbinder (1) zum Zusammenstecken mit einem passenden Steckverbinder, umfassend:
ein Steckverbindergehäuse (3), das eine Anschlussklemme (24) aufnimmt, und ein Befestigungselement (33), wobei das Befestigungselement (33) in dem Endabschnitt (3a) des Steckverbindergehäuses (3) weg von dem passenden Steckverbinder aufgenommen wird, um die Anschlussklemme (24) entlang der Längsrichtung der Anschlussklemme zu fixieren;
ein Gehäuse (2), welches das Steckverbindergehäuse (3) aufnimmt;
**dadurch gekennzeichnet, dass** er des Weiteren umfasst
ein Anlageelement (41), das von dem Gehäuse (2) in einer Richtung lotrecht zu der Längsrichtung nach innen vorsteht, so dass das Anlageelement (41) an dem Endabschnitt (3a) des Steckverbindergehäuses (3) weg von dem passenden Steckverbinder positioniert ist, und zum Anliegen an dem Befestigungselement (33), um zu verhindern, dass sich die Anschlussklemme (24) in einer Längsrichtung der Anschlussklemme (24) weg von der Steckrichtung des Steckverbinders bewegt.

2. Steckverbinder (1) nach Anspruch 1, wobei ein Einführungsschlitz (42), in den ein mit der Anschlussklemme (44) verbundener Elektrodraht (71) eingeführt wird, in dem Anlageelement (41) angeordnet ist.

## Revendications

1. Connecteur (1) à accoupler avec un connecteur d'accouplement comprenant:
un boîtier de connecteur (3) recevant une borne (24) et un élément de fixation (33), l'élément de fixation (33) étant reçu dans la partie d'extrémité (3a) du boîtier de connecteur (3) éloigné du connecteur d'accouplement pour la fixation de la borne (24) dans la direction longitudinale de la borne;
un boîtier (2) recevant le boîtier de connecteur (3);
**caractérisé en ce qu'**il comprend en outre un élément de butée (41) faisant saillie vers l'intérieur à partir du boîtier (2) dans une direction perpendiculaire à la direction longitudinale de telle sorte que l'élément de butée (41) est positionné au niveau de la partie d'extrémité (3a) du boîtier de connecteur (3) en s'écartant du connecteur d'accouplement, et venant en butée sur l'élément de fixation (33) de manière à empêcher la borne (24) de se déplacer dans une direction longitudinale de la borne (24) en s'écartant de la direction d'accouplement du connecteur.

2. Connecteur (1) selon la revendication 1, dans lequel une fente d'insertion (42), dans laquelle est introduit un fil électrique (71) connecté à la borne (24), est agencée dans l'élément de butée (41).
